# EUROPÄISCHE PATENTANMELDUNG

(11) **EP 1 426 735 A2**
(43) Veröffentlichungstag der Anmeldung: **09.06.2004**
(21) Anmeldenummer: 03025945.1
(22) Anmeldetag: 13.11.2003
(51) Int. Cl.: G01D 5/20

(54) **Bedienelement**

(30) Priorität: 07.12.2002 DE 10257258
(71) Anmelder: Preh GmbH, 97616 Bad Neustadt a.d. Saale (DE)
(72) Erfinder: Küchler, Wolfgang, 97645 Ostheim (DE); Schüberth, Stefan, 97616 Bad Neustadt a. d. Saale (DE)
(74) Vertreter: Dietrich, Barbara

(57) **Zusammenfassung**

Es wird vorgeschlagen, ein auf dem magnetorheologischen Grundprinzip arbeitendes System (20, 21) als Rast- bzw. Schleiferelement und / oder zur elektrischen Drehrichtungserkennung vorzusehen. Das System besitzt eine kleine Zahnradpumpe (5), vorzugsweise eine Außenzahnradpumpe. Der mechanische Antrieb eines der Zahnräder (5.1, 5.2) erfolgt durch das Drehen eines Drehknopfes (2) des Bedienelementes (1) oder dergleichen. Das magnetorheologische Fluid (9) wird innerhalb eines Kanals (6) bzw. Ringes gefördert, gepumpt. Über ein, durch eine Software an einer Spule (7) am Kanal (6) eingestelltes, gepulstes Magnetfeld wird die Viskosität des Fluids (9) verändert. Diese Änderung verursacht eine Änderung des Drehmoments bzw. der Rast. Eine weitere Spule (8) am Kanal (9) ermöglicht den Abgriff eines Drehwinkelsignals, um eine Information über die Drehrichtung des Drehknopfes (2) zu erhalten.

## Beschreibung

Die DE 199 64 133 A1 beschreibt einen Drehschalter bzw. Drehsteller, der sogenannten Knopfaufschlagkriterien entspricht und an seinem Drehknopfunterteil eine Schleiferplatte aufweist. Über Kontaktfedern an einer Grundplatte werden die entsprechenden Signale abgegriffen. Dadurch ist das Betätigungselement durchdrehbar. Die Rast wird durch ein seitliches Rändetrad erzeugt.

Ein weiteres bekanntes Rastelement sind schleifende Rastfeder, wie sie häufig auch bei Potentiometern anzufinden sind. Ebenfalls bekannt sind Drehsteller, die auf dem Prinzip der magnetischen Feldstärkeänderung beruhen, wie beispielsweise in der EP 0 780 852 B1 beschrieben.

Aus der gattungsgemäßen DE 100 29 191 A1 ist ein elektronisch gesteuerter Flüssigkeitsdrehknopf als haptisches Bedienelement bekannt. In einer der Ausführungsbeispiele weist der Drehsteller ein geblechtes Statorteil auf, welches aus weichmagnetischem Material besteht, eine Ankerwicklung trägt und ein radial verlaufendes Magnetfeld in einem magnetisch wirksamen Spalt zwischen dem Statorteil und einem weiteren Statorteil erzeugt. Im Spalt befindet sich ein ringförmiger, nichtmagnetischer Rotor, der über eine Welle mit einem glockenförmigen Drehknopf verbunden ist. Der Weiteren befindet sich im Spalt eine magnetisch wirksame Flüssigkeit. Der Drehknopf kann in unterschiedlicher Intensität und Länge gebremst werden, je nachdem, ob ein Anschlag simuliert oder ein Rastgefühl gespürt werden soll. Dreht der Benutzer am Drehknopf, so wird beim Benutzer ein Gefühl abwechselnd positiver und negativer Beschleunigung bewirkt, was dem haptischen Eindruck eines Rastens entspricht. Bevorzugt wird eine PWM-Ansteuerung der Spule. Zudem wird ein Algorithmus zur haptischen Darstellung eines programmierbaren Anschlages beschrieben. Die Drehwinkelposition des Rotors wird mittels einem Drehwinkelsensors in ein drehwinkelrepräsentierendes Signal umgesetzt.

Die Erfindung stellt sich die Aufgabe, ein Bedienelement mit elektrischer Rast anzugeben, welches einen einfachen Aufbau aufweist.

Gelöst wird die Aufgabe durch die Merkmale des Patentanspruchs 1.

Der Erfindung liegt die Idee zugrunde, ein auf dem magnetorheologischen Grundprinzip arbeitendes System als Rast- bzw. Schleiferelement und/oder zur elektrischen Drehrichtungserkennung vorzusehen und dieses als eine Art Anbauteil an ein Bedienelement leicht motierbar zu gestalten. Dabei kann auf einen Drehwinkelsensor verzichtet werden, da die Drehrichtung sich über das magnetorheologischen Fluid im Anbauteil bestimmen läßt.

Das jeweilige System besitzt eine kleine Zahnradpumpe, vorzugsweise eine Außenzahnradpumpe, die in einem, das Fluid enthaltenen Ring bzw. Kanal funktionsmäßig integriert ist. Das magnetorheologische Fluid wird durch die Zahnradpumpe innerhalb des Kanals bzw. Ringes gefördert, gepumpt. Der mechanische Antrieb eines der Zahnräder erfolgt durch das Drehen eines Drehknopfes des Bedienelementes oder dergleichen. Je nach Ausführung ist am Kanal bzw. um diesen herum eine Spule angebracht.

Im Anwendungsfall der Rast wird der Spule durch eine Software ein gepulster Strom zugeführt, wodurch sich ein gepulstes Magnetfeld an der Spule einstellt. Durch die Änderung des auf das Fluid einwirkenden Magnetfeldes wird die Viskosität des Fluids verändert. Dabei wird der Effekt ausgenutzt, dass ein kleines Magnetfeld einer dünnflüssigen Viskosität des Fluids entspricht und ein dickflüssiges Fluid ein großes Magnetfeld besitzt. Diese Änderung der Viskosität verursacht eine Änderung des Drehmoments bzw. der Rast. Bei einer dünnen Viskosität zeigt sich dieses als ein leichtes, bei der dickflüssigen als ein schwereres Rastgefühl/Drehmoment.

Im Anwendungsfall der Drehrichtungsbestimmung wird über die Spule am Kanal die Flußrichtung des Fluids bestimmt und daraus ein Drehrichtungssignal ermittelt. Dreht das antreibende Zahnrad nach rechts, ist der Saugraum links und der Druckraum rechts. Drehen die Zahnräder andersherum und das antreibende Zahnrad nach links, befindet sich der Saugraum rechts und der Druckraum links. Die Förderrichtung für das Fluid ändert sich und damit der induzierte Strom in der Spule im Vorzeichen.

Eine Kombination beider Systeme ermöglicht eine Vereinfachung, da nur ein Kanal mit dem Fluid, eine Zahnradpumpe und zwei Spulen benötigt werden.

Der Vorteil einer derartigen Arbeitsweise ist zudem, dass jede beliebige Rastkurve softwaremäßig erzeugt werden kann. Diese, mittels Software geschaffene Rastkurve, bestimmt die Pulsung des sich ändernden Magnetfeld an der ersten Spule.
Des Weiteren kann zum Ende einer Drehbewegung beispielsweise das Drehmoment hoch gewählt werden, um anzuzeigen, dass eine Endstellung erreicht ist, beispielsweise größte Lautstärke, größte Gebläsestufe, etc.

Anhand eines Ausführungsbeispiels mit Zeichnung soll die Erfindung näher erläutert werden. Es zeigt:
- Fig. 1: ein Bedienelement mit Aufbauteil,
- Fig. 2: das Aufbauteil aus Fig. 1 in einer Draufsicht, geschnitten,
- Fig. 3: das Aufbauteil im Schnitt A-A aus Fig. 2,

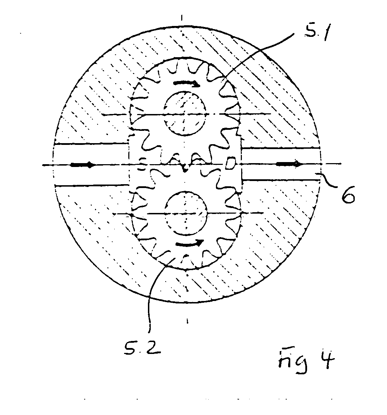

- Fig. 4: eine vergrößerte Darstellung des Eingriffs der Zahnräder.

Das nachfolgende Ausführungsbeispiel bezieht sich auf die Kombination eines Rastsystems 20 und eines Drehrichtungserfassungssystem 21 in einem Aufbauteil 3.

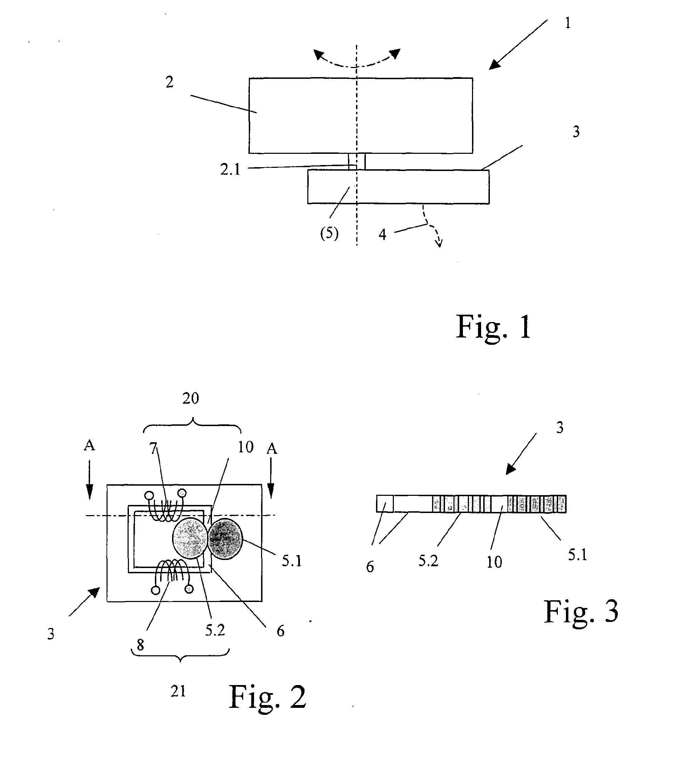

In Fig. 1 ist der Aufbau eines Bedienelementes 1 dargestellt, welches zumindest aus einem Drehknopf 2 und dem Aufbauteil 3 besteht. Ein elektrischer Abgriff vom Aufbauteil 3 erfolgt mittels Leitung 4 für eine nicht näher dargestellte Auswerteelektronik, die mechanische Ankopplung zwischen dem Aufbauteil 3 und dem Drehknopf 2 über eine Drehachse 2.1.

Fig. 2 zeigt einen inneren Aufbau des Aufbauteils 3. Eine Zahnradpumpe 5, die aus zwei Zahnrädern 5.1 und 5.2 besteht, liegt im Querschnitt eines Kanals 6. Eines der beiden Zahnräder 5.1, 5.2 ist mit der Drehachse 2.1 verbunden. Die Zahnräder 5.1, 5.2 besitzen beispielsweise einen Durchmesser von ca. 4 mm. Am Kanal 6 ist eine erste Spule 7 und eine weitere Spule 8 angebracht. Im Kanal 6 befindet sich ein magnetorheologisches Fluid 9.

Fig. 3 zeigt dieses Aufbauteil 3 im Schnitt A-A, wobei erkennbar ist, dass ein Bereich 10, in dem sich die Zahnräder 5.1, 5.2 kämmen, im Kanal 6 liegt.

Die Funktion des Bedienelementes 1 ist wie folgt:

Mit Verdrehung des Drehknopfes 2 nach rechts, wird hier das Zahnrad 5.1 verdreht, welches das Zahnrad 5.2 mit verstellt. In bekannter Arbeitsweise wird das Fluid 9 durch den Kanal 6 gepumpt. Mit Hilfe der Spule 7, an die ein gepulster Strom gegeben wird und an der ein Magnetfeld erzeugt wird, wird die Viskosität des Fluides 9 veränderbar, was je nach gewünschter Haptik auf Grundlage einer vorgegebenen Rastkurve erfolgt.

Mit dem Transport des Fluids 9 entlang der weiteren Spule 8 wird in dieser durch das magnetische Verhalten des Fluids 9 ein Strom erzeugt, aus dem die Drehrichtung des Drehknopfes 2 und damit der Drehverstellung durch die Fluß- bzw. Transportrichtung des Fluids 9 herleitbar ist, da sich je nach Richtungstransport das Vorzeichen des Stromes ändert.

Nicht näher dargestellt ist der elektrische Abgriff des mit dem Bedienelement 1 einzustellenden Wertes. Es versteht sich, dass wie herkömmlich das Bedienelement 1 unterhalb des Drehknopfes 2 eine Kontaktringscheibe aufweisen kann, wobei der Signalabgriff herkömmlich über Kontakte einer Leiterplatte erfolgt. Das Aufbauteil 3 ist in dieser Ausführung dann zwischen Drehknopf 2 und Leiterplatte eingebunden.

## Patentansprüche

1. Bedienelement (1) zumindest mit einem Drehknopf (2), einer Drehachse (2.1) und einer Rasteinrichtung (20), die
- eine Zahnradpumpe (5) aufweist, welche im Querschnitt eines Kanals (6) eingebunden ist, wodurch bei Verdrehung des Drehknopfes (2) ein magnetorheologisches Fluid (9) mit Hilfe der Zahnradpumpe (5) durch den Kanal (6) gepumpt wird und
- am Kanal (6) eine Spule (7) angebracht ist, mit deren Hilfe die Viskosität des Fluids (9) verändert wird, wenn unterschiedliche Rastkurven definiert und eingestellt werden sollen.

2. Bedienelement (1) zumindest mit einem Drehknopf (2), einer Drehachse (2.1) und einer Drehrichtungserfassungseinrichtung (21), die
- eine Zahnradpumpe (5) aufweist, welche im Querschnitt eines Kanals (6) eingebunden ist, wodurch bei Verdrehung des Drehknopfes (2) ein magnetorheologisches Fluid (9) mit Hilfe der Zahnradpumpe (5) durch den Kanal (6) gepumpt wird und
- am Kanal (6) eine Spule (8) angebracht ist, durch die die Strömungsrichtung des Fluids (9) und damit die Drehrichtungsänderung des Drehknopfes (2) anhand des vorbeifliegenden Fluids (9) ermittelbar ist.

3. Bedienelement (1) zumindest mit einem Drehknopf (2), einer Drehachse (2.1), einer Rast - und Drehwinkelerfassungseinrichtung (20, 21), wobei diese
- eine Zahnradpumpe (5) aufweist, welche im Querschnitt eines Kanals (6) eingebunden ist, wodurch bei Verdrehung des Drehknopfes (2) ein magnetorheologisches Fluid (9) mit Hilfe der Zahnradpumpe (5) durch den Kanal (6) gepumpt wird,
- am Kanal (6) eine Spule (7) angebracht ist, mit deren Hilfe die Viskosität des Fluids veränderbar ist und
- am Kanal (6) eine weitere Spule (8) angebracht ist, durch die die Strömungsrichtung des Fluids (9) und damit die Drehänderung des Drehknopfes (2) anhand des vorbeifließenden Fluids (9) ermittelbar ist.

4. Bedienelement nach einem der Ansprüche 1 bis 3, **dadurch gekennzeichnet, dass** die Zahnradpumpe (3) eine Außenzahnradpumpe ist.

5. Bedienelement nach einem der Ansprüche 1 bis 4, **dadurch gekennzeichnet, dass** die Zahnräder (5.1, 5.2) einen Durchmesser von jeweils ca. 4 mm haben.

6. Bedienelement nach einem der Ansprüche 1 bis 5, **dadurch gekennzeichnet, dass** an die erste Spule (7) ein gepulster Strom gegeben wird, wodurch ein Magnetfeld erzeugt wird, welches auf das Fluid (9) einwirkt.

7. Bedienelement nach einem der Ansprüche 1 bis 6, **dadurch gekennzeichnet, dass** jede beliebige Rastkurve softwaremäßig erzeugt werden kann, welche die Pulsung des sich ändernden Magnetfeld an der ersten Spule (7) bestimmt.

8. Bedienelement nach einem der Ansprüche 1 bis 7, **dadurch gekennzeichnet, dass** zum Ende einer Drehbewegung das Drehmoment hoch gewählt werden kann, um eine Endstellung anzuzeigen.
